# EUROPÄISCHE PATENTSCHRIFT

(11) **EP 3 217 694 B1**
(45) Veröffentlichungstag und Bekanntmachung des Hinweises auf die Patenterteilung: **24.10.2018**
(21) Anmeldenummer: 17157305.8
(22) Anmeldetag: 22.02.2017
(51) Int. Cl.: H04W 12/04, H04W 4/14, H04W 84/12, H04W 76/11, H04W 84/18, H04W 88/08, H04W 84/04, H04L 29/06

(54) **VORRICHTUNG UND VERFAHREN ZUM VERBINDEN EINES MOBILGERÄTES MIT EINEM FELDGERÄT**
DEVICE AND METHOD FOR CONNECTING A MOBILE DEVICE WITH A FIELD DEVICE
DISPOSITIF ET PROCÉDÉ DE CONNEXION D'UN APPAREIL MOBILE À UN APPAREIL DE TERRAIN

(30) Priorität: 08.03.2016 DE 102016104141
(43) Veröffentlichungstag der Anmeldung: 13.09.2017
(73) Patentinhaber: Sick AG, 79183 Waldkirch (DE)
(72) Erfinder: Beha, Martin, 79211 Denzlingen (DE)

(56) Entgegenhaltungen:
- WO-A1-2015/066248
- DE-B3-102012 214 018
- US-A1- 2015 038 129

## Beschreibung

Die vorliegende Erfindung betrifft ein Verfahren zum Verbinden eines Mobilgerätes mit einem Feldgerät über einen WLAN-Zugangspunkt nach dem Oberbegriff von Anspruch 1 und eine Vorrichtung nach dem Oberbegriff von Anspruch 13.

Der Verbindungsaufbau zu einem Feldgerät zum Zweck der Inbetriebnahme, der Parametrierung und dem Betrieb soll nach dem Stand der Technik über eine drahtlose (Wireless) Schnittstelle möglich sein. Bevorzugt kommen hier WLAN und Bluetooth zum Einsatz. Diese beiden Technologien ermöglichen es, das Feldgerät per Mobilgerät, z. B. Smartphone, Tablet-Rechner, Notebook usw. zu bedienen.

Im Folgenden wird speziell der Verbindungsaufbau per WLAN betrachtet. Damit sich ein Benutzer mit einem Mobilgerät mit einem Feldgerät verbinden kann, muss das Feldgerät über eine WLAN-Zugangspunkt (WLAN-Access-Point) verfügen. Zur Anmeldung am WLAN-Zugangspunkt wird zusätzlich zu einem WLAN-Namen (WLAN-SSID) ein WLAN-Schlüssel benötigt.

Mit Hilfe dieses WLAN-Schlüssels wird die Kommunikation zwischen Client, nämlich dem Mobilgerät und dem WLAN-Zugangspunkt verschlüsselt. Jeder, der den WLAN-Schlüssel kennt und sich in Reichweite des WLAN-Netzwerkes befindet, kann sich mit dem Gerät verbinden, oder die Kommunikation abhören.

Ein solch unkontrollierter Zugriff muss jedoch verhindert werden.

Feldgeräte können per Netzwerkverbindung mit einem sogenannten RADIUS-Server verbunden sein. Der RADIUS-Server benötigt im Hintergrund eine entsprechende Infrastruktur, die verwaltet und gepflegt werden muss. Zusätzlich muss das Feldgerät zwingend mit dem RADIUS-Server verbunden werden.

Auch die Installation einer speziellen APP in Verbindung mit einer Nahfeldkommunikationseinheit kann für eine sichere Authentifizierung sorgen. Die Installation einer speziellen APP ist aus Sicherheitsgründen nicht immer möglich und erfordert einen Zusatzaufwand. Auch das Vorhandensein der Nahfeldkommunikationseinheit erfordert zusätzliche Hardwarekomponenten.

Auch eine manuelle Verwaltung eines WLAN-Schlüssels und eine gezielte Weitergabe sind möglich.

Ein WLAN-Zugangspunkt (WLAN Access Point oder Wireless Access Point), insbesondere ein drahtloser Zugangspunkt, oder auch Basisstation genannt, ist ein elektronisches Gerät, das als Schnittstelle für kabellose Kommunikationsgeräte fungiert. Endgeräte, nämlich Feldgeräte, stellen per Wireless Adapter (Drahtlosadapter) eine drahtlose Verbindung zum WLAN Zugangspunkt her, der beispielsweise über ein Kabel mit einem fest installierten Kommunikationsnetz verbunden ist. Für gewöhnlich verbinden WLAN-Zugangspunkte Notebooks und andere mobile Endgeräte mit eingebautem Drahtlosadapter (Wireless Adapter) über ein Wireless Local Area Network (WLAN, Funknetz) mit einem Local Area Network (LAN) oder einem anderen kabelgebundenen Datennetz (z. B. Telefonnetz).

Die DE 10 2012 214 018 B3 offenbart eine Autorisierung eines Nutzers durch ein tragbares Kommunikationsgerät.

Die US 2015/0038129 A1 offenbart ein drahtloses Netzwerkgerät, welches über ein Mobilgerät konfiguriert wird.

Die WO 2015/066248 A1 offenbart eine Bereitstellung von gemeinsamen WiFi-Anmeldeinformationen. Gemäß verschiedenen Ausführungsformen ist mindestens eine Server-Computervorrichtung konfiguriert, um geteilte WiFi-Anmeldeinformationen an eine mobile Vorrichtung (102) zu übertragen.

Eine Aufgabe der Erfindung besteht darin, eine sichere Verbindung zwischen einem Mobilgerät und einem Feldgerät bereitzustellen, ohne dass das Feldgerät eine Internetverbindung aufweist.

Die Aufgabe wird gemäß Anspruch 1 gelöst durch ein Verfahren zum Verbinden eines Mobilgerätes mit einem Feldgerät über einen WLAN-Zugangspunkt, wobei ein Server mit einem Webdienst vorgesehen ist, wobei das Feldgerät ein erstes Modul zur Erzeugung eines WLAN-Schlüssels aufweist, der Server mit dem Webdienst ein zweites Modul zur Erzeugung eines WLAN-Schlüssels aufweist, wobei das erste Modul und das zweite Modul jeweils identische WLAN-Schlüssel erzeugen, wobei das Feldgerät über mindestens eine Identifizierungsinformation von dem Mobilgerät identifiziert wird, wobei das Mobilgerät die Identifizierungsinformation des Feldgeräts an den Server mit dem Webdienst übermittelt, wobei der Server mit dem Webdienst den zu der Identifizierungsinformation zugehörigen WLAN-Schlüssel an das Mobilgerät übermittelt, wobei das Mobilgerät drahtlos mittels einem WLAN-Namen und dem WLAN-Schlüssel über den WLAN-Zugangspunkt mit dem Feldgerät verbunden wird.

Die Aufgabe wird weiter gelöst durch eine Vorrichtung zum Verbinden eine Mobilgerätes mit einem Feldgerät über einen WLAN-Zugangspunkt, wobei ein Server mit einem Webdienst vorgesehen ist, das Feldgerät ein erstes Modul zur Erzeugung eines WLAN-Schlüssels aufweist, der Server mit dem Webdienst ein zweites Modul zur Erzeugung eines WLAN-Schlüssels aufweist, wobei das erste Modul und das zweite Modul ausgebildet sind, jeweils identische WLAN-Schlüssel zu erzeugen, wobei das Feldgerät über eine Identifizierungsinformation von dem Mobilgerät identifizierbar ist, wobei das Mobilgerät ausgebildet ist, die Identifizierungsinformation des Feldgeräts an den Server mit dem Webdienst zu übermitteln, wobei der Server mit dem Webdienst dazu ausgebildet ist, den zu der Identifizierungsinformation zugehörigen WLAN-Schlüssel an das Mobilgerät zu übermitteln, wobei das Mobilgerät drahtlos mittels dem WLAN-Namen und dem WLAN-Schlüssel über den WLAN-Zugangspunkt mit dem Feldgerät verbunden ist.

Insbesondere betrifft die Erfindung Feldgeräte der Prozessautomatisierung, also beispielsweise Transmitter, insbesondere O₂-Transmitter, Feldgeräte zur Rauchgasuntersuchung, wie z. B. Partikelmessgeräte, Laserscanner und dergleichen.

Der WLAN-Name wird auch als SSID bezeichnet. Wobei SSID für Service Set Identifier steht. Service Set bezeichnet nach der Norm 802.11 des Institute of Electrical and Electronics Engineers alle Geräte in einem WLAN. Ein Service Set Identifier (SSID) ist ein frei wählbarer Name eines Service Sets, durch den es ansprechbar wird.

Ein WLAN-Zugangspunkt kann mehrere WLAN-Namen zugleich tragen, was größere Bedeutung mit der Einführung von Autorisierung für WLANs erlangte. Solche multiplen WLAN-Namen ermöglichen einem WLAN Zugangspunkt, mehrere Virtual Local Area Networks anzubieten.

Ein WLAN-Name kann bis zu 32 Byte lang sein und entsprechend bis zu 32 ASCII-Zeichen umfassen. Sendet ein Gerät einen Datenframe mit leerem WLAN-Namen, sendet der WLAN-Zugangspunkt als Antwort jeden WLAN-Namen, den der WLAN-Zugangspunkt unterstützt. Aus diesen Antworten kann das Gerät eine Liste erzeugen, die dem Benutzer die Auswahl eines WLAN-Namens ermöglicht.

Der WLAN-Schlüssel ist ein Sicherheitsschlüssel. Beispielsweise ist Wi-Fi Protected Access 2 (WPA2) die Implementierung eines Sicherheitsschlüssels bzw. Sicherheitsstandards für Funknetzwerke nach den WLAN-Standards IEEE 802.11a, b, g, n und ac und basiert auf dem Advanced Encryption Standard (AES).

Ein Ressourcenanzeiger (Uniform Ressource Locator, Abk. URL) identifiziert und lokalisiert eine Ressource, wie z. B. eine Website über die zu verwendende Zugriffsmethode, z. B. das verwendete Netzwerkprotokoll wie HTTP oder FTP und den Ort der Ressource in Computernetzwerken. Der aktuelle Stand ist als RFC 1738 publiziert. Die einschlägigen RFC-Spezifikationen sind industrielle Standards der Internet Engineering Task Force (IETF).

Ressourcenanzeiger sind eine Unterart der generellen Identifikationsbezeichnung mittels Uniform Ressource Identifiern (URIs). Da URLs die erste und häufigste Art von URls darstellen, werden die Begriffe häufig synonym verwendet. Im allgemeinen Sprachgebrauch werden Ressourcenanzeiger auch als Internet- oder Webadresse bezeichnet, wobei damit der umgangssprachlich häufigen Gleichsetzung von Internet und World Wide Web folgend meist speziell Ressourcenanzeiger von Webseiten gemeint sind.

Gemäß der Erfindung muss keine zusätzliche Software bzw. Anwendung/APP installiert werden. Der Betrieb einer zusätzlichen Server-Infrastruktur entfällt ebenso. Auch der Aufbau einer Zugangs-Infrastruktur durch einen Kunden vor Ort ist nicht nötig.

Durch die Authentifizierung am Webdienst erhalten nur noch autorisierte Benutzer/Personen einen Zugriff auf den WLAN-Zugangspunkt des Feldgerätes.

Wenn sich ein Benutzer mit einem WLAN-Zugangspunkt verbinden möchte, dann übermittelt der WLAN-Zugangspunkt zunächst seinen WLAN-Namen. Dieser WLAN-Name besteht aus maximal 32 Zeichen und wird in einem WLAN-Auswahlmenü des Mobilgerätes, beispielsweise eines Smartphones, Tablet-Rechners, Notebooks oder dergleichen angezeigt.

Alle verfügbaren WLANs kann sich der Benutzer jederzeit ohne die Installation eines zusätzlichen Programms bzw. eines zusätzliche Anwendungsprogramms wie einer APP auf dem Mobilgerät anzeigen lassen.

Der WLAN-Name wird zum einen dazu verwendet, das Feldgerät zu identifizieren und zum anderen wird die Identifizierungsinformation, z. B. eine 16 Bit lange Identifizierungsinformation des Feldgerätes, mit übertragen. Zum Beispiel lautet die Identifizierungsinformation ,GM100 Kamin1 :WWS25TF23R1265TTF'.

Mit dieser Information kann sich der Benutzer, welcher sich mit dem WLAN-Zugangspunkt verbinden möchte, den benötigten WLAN-Schlüssel beschaffen.

Hierzu meldet sich der Benutzer im nächsten Schritt an einem ihm bekannten Webdienst an. War die Authentifizierung beim Webdienst erfolgreich, gelangt der Benutzer durch die Eingabe des WLAN-Namens an den derzeit im Feldgerät gültigen WLAN-Schlüssel. Der Webdienst wird z. B. von der Firma SICK AG zur Verfügung gestellt.

Eine wichtige Voraussetzung besteht des Weiteren darin, dass jeweils auf dem Feldgerät und im Webdienst der identische Algorithmus bzw. das erste Modul und das zweite Modul zur Berechnung eines identischen tatsächlichen WLAN-Schlüssels vorhanden sein müssen.

In Weiterbildung der Erfindung übermittelt der WLAN-Zugangspunkt seinen WLAN-Namen an das Mobilgerät, wobei der WLAN-Name Identifizierungsinformationen des Feldgeräts aufweist. Dadurch braucht lediglich der WLAN-Name übermittelt werden, welcher die Identifizierungsinformation beinhaltet.

In Weiterbildung der Erfindung sind die Identifizierungsinformationen an dem Feldgerät angebracht und werden in das Mobilgerät eingegeben. Beispielsweise sind die Identifizierungsinformationen direkt dem Typenschild des Feldgerätes zu entnehmen. Die Identifizierungsinformationen können jedoch auch an einem Display des Feldgerätes abgelesen werden.

In Weiterbildung der Erfindung ist die Identifizierungsinformation durch einen QR-Code an dem Feldgerät dargestellt, wobei der QR-Code von dem Mobilgerät gelesen wird.

Per QR-Code, welcher sich in der Nähe oder direkt am Feldgerät befindet, kann ebenfalls eine eindeutige Identifizierung stattfinden. Wird der QR-Code beispielsweise eingescannt, bekommt der Benutzer beispielsweise die Identifizierungsinformation bzw. einen Code für die Identifizierungsinformation angezeigt, welcher beim Webdienst angegeben werden kann. Der QR-Code kann sich bei Sichtkontakt zum Feldgerät auch direkt am Feldgerät befinden. Der QR-Code kann beispielsweise an einem Display des Feldgerätes angezeigt werden.

In Weiterbildung der Erfindung übermittelt das Mobilgerät die Identifizierungsinformationen des Feldgerätes per Anruf/Textnachrichtendienst/Internet an den Server mit dem Webdienst.

Steht dem Benutzer keine Internetverbindung zur Verfügung, über welche der Webdienst erreichbar ist, kann der WLAN-Schlüssel mit Hilfe eines Codes des WLAN-Schlüssels auch per Anruf abgefragt werden.

Steht dem Benutzer keine Internetverbindung zur Verfügung, über welche der Webdienst erreichbar ist, kann der Code aus dem WLAN-Schlüssel per Textnachrichtendienst, z. B. per SMS (Short Message) an eine bekannte Nummer geschickt werden. Anschließend erhält der Benutzer eine Antwort, z. B. wiederum per Textnachrichtendienst, z. B. per SMS mit dem benötigten WLAN-Schlüssel.

In Weiterbildung der Erfindung ist das Feldgerät nur über den WLAN-Zugangspunkt mit dem Mobilgerät verbunden. Dadurch sind keine weiteren Schnittstellen zur Verbindung mit dem Mobilgerät notwendig.

In einer bevorzugten Ausführungsform der Erfindung wird der WLAN-Schlüssel mindestens einmal pro Tag geändert. Dadurch wird eine Zugriffssicherheit erhöht. Selbst wenn Unbefugte in den Besitz des WLAN-Schlüssels gelangen würden, wäre ein solcher Zugriff nur zeitlich begrenzt möglich. Der WLAN-Schlüssel kann auch in kürzeren Zeitabständen geändert werden, beispielsweise mindestens einmal pro Stunde.

In Weiterbildung der Erfindung enthält der WLAN-Name die Seriennummer und/oder die Bezeichnung des Feldgerätes. Dadurch braucht nur ein WLAN-Name übermittelt werden, wobei innerhalb des Datenformats des WLAN-Namens die Seriennummer und die Bezeichnung des Feldgerätes übermittelt wird.

In einer bevorzugten Ausführungsform der Erfindung enthält der WLAN-Name einen Ressourcenanzeiger (URL, Uniform Ressource Locator), über welchen direkt auf den Webdienst zugegriffen werden kann. Dadurch kann auf dem Mobilgerät direkt aus dem WLAN-Namen heraus die Verbindung zu dem Webdienst hergestellt werden. Der Ressourcenanzeiger ist dabei voreingestellt auf den vorgesehenen gewünschten Webdienst insbesondere des Herstellers des Feldgerätes.

In Weiterbildung der Erfindung wird das Mobilgerät mittels Benutzername und Passwort an dem Server mit dem Webdienst angemeldet. Dadurch wird eine Manipulationssicherheit erhöht, da nur mit Kenntnis der Zugangsdaten, bestehend aus Benutzername und Passwort, eine Anmeldung an dem Webdienst erfolgen kann.

In Weiterbildung übermittelt das Mobilgerät die Identifizierungsinformationen des Feldgeräts an den Server mit dem Webdienst mittels mindestens einer Kurznachricht, insbesondere SMS und/oder der Server mit dem Webdienst übermittelt einen zu den Identifizierungsinformationen zugehörigen WLAN-Schlüssel mittels mindestens einer Kurznachricht, insbesondere SMS an das Mobilgerät. Dadurch erfolgt eine besonders einfache standardisierte Kommunikation zwischen dem Mobilgerät und dem Webdienst, die auch auf einfachsten Mobilgeräten zur Verfügung steht.

In Weiterbildung der Erfindung ist eine Software, insbesondere ein Anwendungsprogramm für das Mobilgerät, insbesondere ein Smartphone zur Durchführung des Verfahrens vorgesehen.

Per Anwendungsprogramm bzw. APP kann ebenfalls eine eindeutige Identifizierung stattfinden. Durch Auswahl eines Netzes verbindet sich das Anwendungsprogramm automatisch mit dem Webdienst und richtet bei erfolgreicher Authentifizierung am Webdienst automatisch die WLAN-Verbindung ein. Optional sind ein Benutzername und ein Passwort in dem Anwendungsprogramm bereits hinterlegt.

Die Erfindung wird nachstehend auch hinsichtlich weiterer Vorteile und Merkmale unter Bezugnahme auf die beigefügte Zeichnung anhand von Ausführungsbeispielen erläutert. Die Figur der Zeichnung zeigt in:

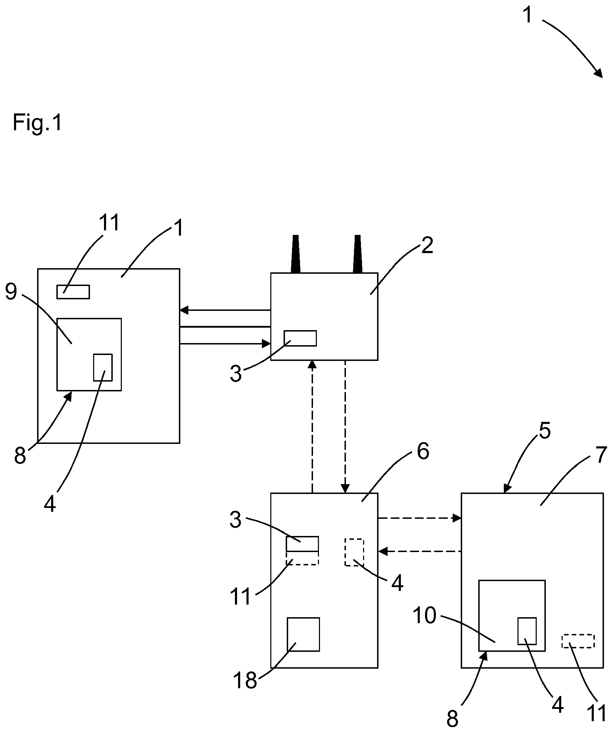

- Figur 1: eine Vorrichtung und ein Verfahren zum Verbinden eines Mobilgerätes mit einem Feldgerät über einen WLAN-Zugangspunkt.

In den nachfolgenden Figuren sind identische Teile mit identischen Bezugszeichen versehen.

Figur 1 zeigt ein Verfahren bzw. eine Vorrichtung zum Verbinden eines Mobilgerätes 6 mit einem Feldgerät 1 über einen WLAN-Zugangspunkt, wobei ein Server 5 mit einem Webdienst 7 vorgesehen ist, wobei das Feldgerät 1 ein erstes Modul 9 zur Erzeugung eines WLAN-Schlüssels 4 aufweist, der Server 5 mit dem Webdienst 7 ein zweites Modul 10 zur Erzeugung eines WLAN-Schlüssels 4 aufweist, wobei das erste Modul 9 und das zweite Modul 10 ausgebildet sind, jeweils identische WLAN-Schlüssel 4 zu erzeugen, wobei das Feldgerät 1 über eine Identifizierungsinformation 11 von dem Mobilgerät 6 identifizierbar ist, wobei das Mobilgerät 6 ausgebildet ist, die Identifizierungsinformation 11 des Feldgeräts 1 an den Server 5 mit dem Webdienst 7 zu übermitteln, wobei der Server 5 mit dem Webdienst 7 dazu ausgebildet ist, den zu der Identifizierungsinformation 11 zugehörigen WLAN-Schlüssel 4 an das Mobilgerät 6 zu übermitteln, wobei das Mobilgerät 6 drahtlos mittels dem WLAN-Namen 3 und dem WLAN-Schlüssel 4 über den WLAN-Zugangspunkt 2 mit dem Feldgerät 1 verbunden ist.

Feldgeräte 1 sind beispielsweise Feldgeräte der Prozessautomatisierung, also beispielsweise Transmitter, insbesondere O₂-Transmitter, Feldgeräte zur Rauchgasuntersuchung, wie z. B. Partikelmessgeräte, Laserscanner und dergleichen.

Wenn sich ein Benutzer mit einem WLAN-Zugangspunkt 2 verbinden möchte, dann übermittelt der WLAN-Zugangspunkt 2 zunächst seinen WLAN-Namen 3. Dieser WLAN-Name 3 besteht aus maximal 32 Zeichen und wird in einem WLAN-Auswahlmenü des Mobilgerätes, beispielsweise eines Smartphones, Tablet-Rechners, Notebooks oder dergleichen angezeigt.

Alle verfügbaren WLANs kann sich der Benutzer jederzeit ohne die Installation eines zusätzlichen Programms bzw. eines zusätzlichen Anwendungsprogramms wie einer APP auf dem Mobilgerät 6 anzeigen lassen.

Der WLAN-Name 3 wird zum einen dazu verwendet, das Feldgerät 1 zu identifizieren und zum anderen wird die Identifizierungsinformation 11, z. B. eine 16 Bit lange Identifizierungsinformation 11 des Feldgerätes 1 mit übertragen. Zum Beispiel lautet die Identifizierungsinformation ,GM100 Kamin1 :WWS25TF23R1265TTF'.

Mit dieser Information kann sich der Benutzer, welcher sich mit dem Mobilgerät 6 mit dem WLAN-Zugangspunkt 2 verbinden möchte, den benötigten WLAN-Schlüssel 4 beschaffen.

Hierzu meldet sich der Benutzer im nächsten Schritt an einem ihm bekannten Webdienst 7 an. War die Authentifizierung beim Webdienst 7 erfolgreich, gelangt der Benutzer durch die Eingabe des WLAN-Namens 3 an den derzeit im Feldgerät gültigen WLAN-Schlüssel 4. Der Webdienst 7 wird z. B. von der Firma SICK AG zur Verfügung gestellt.

Eine wichtige Voraussetzung besteht des Weiteren darin, dass jeweils auf dem Feldgerät 1 und im Webdienst 7 der identische Algorithmus bzw. das erste Modul 9 und das zweite Modul 10 zur Berechnung eines identischen tatsächlichen WLAN-Schlüssels 4 vorhanden sein müssen.

Gemäß Figur 1 übermittelt der WLAN-Zugangspunkt 2 seinen WLAN-Namen 3 an das Mobilgerät 6, wobei der WLAN-Name 3 Identifizierungsinformationen 11 des Feldgeräts 1 aufweist.

Optional sind die Identifizierungsinformationen 11 an dem Feldgerät 1 angebracht und werden in das Mobilgerät 6 eingegeben. Beispielsweise sind die Identifizierungsinformationen 11 direkt dem Typenschild des Feldgerätes 1 zu entnehmen. Die Identifizierungsinformationen 11 können jedoch auch an einem Display des Feldgerätes abgelesen werden.

Weiter optional ist die Identifizierungsinformation 11 durch einen QR-Code an dem Feldgerät 1 dargestellt, wobei der QR-Code von dem Mobilgerät 6 gelesen wird.

Wird der QR-Code beispielsweise eingescannt, bekommt der Benutzer beispielsweise die Identifizierungsinformation 11 bzw. einen Code für die Identifizierungsinformation 11 angezeigt, welcher beim Webdienst 7 angegeben werden kann. Der QR-Code kann sich bei Sichtkontakt zum Feldgerät 1 auch direkt am Feldgerät 1 befinden. Der QR-Code kann beispielsweise an einem Display des Feldgerätes 1 angezeigt werden.

Gemäß Figur 1 übermittelt das Mobilgerät 6 die Identifizierungsinformationen 11 des Feldgerätes 1 optional per Anruf/Textnachrichtendienst oder über das Internet an den Server 5 mit dem Webdienst 7.

Das Feldgerät 1 ist optional nur über den WLAN-Zugangspunkt 2 mit dem Mobilgerät 6 verbunden. Der WLAN-Schlüssel 4 wird beispielsweise mindestens einmal pro Tag geändert.

Gemäß Figur 1 enthält der WLAN-Name 3 die Seriennummer und/oder die Bezeichnung des Feldgerätes 1. Beispielsweise wird innerhalb des Datenformats des WLAN-Namens 3 die Seriennummer und die Bezeichnung des Feldgerätes 1 übermittelt.

Beispielsweise enthält der WLAN-Name 3 einen Ressourcenanzeiger, über welchen direkt auf den Webdienst 7 zugegriffen werden kann. Der Ressourcenanzeiger ist dabei beispielsweise voreingestellt auf den vorgesehenen gewünschten Webdienst 7.

Beispielsweise wird das Mobilgerät 6 mittels Benutzername und Passwort an dem Server 5 mit dem Webdienst 7 angemeldet.

Optional übermittelt das Mobilgerät 6 die Identifizierungsinformationen 11 des Feldgeräts 1 an den Server 5 mit dem Webdienst 7 mittels mindestens einer Kurznachricht, insbesondere SMS und/oder der Server 5 mit dem Webdienst 7 übermittelt einen zu den Identifizierungsinformationen 11 zugehörigen WLAN-Schlüssel 4 mittels mindestens einer Kurznachricht, insbesondere SMS an das Mobilgerät 6.

Gemäß Figur 1 ist eine Software, insbesondere ein Anwendungsprogramm 18 bzw. APP für ein Mobilgerät 6, insbesondere Smartphone zur Durchführung des Verfahrens vorgesehen.

Per Anwendungsprogramm 18 bzw. APP kann ebenfalls eine eindeutige Identifizierung stattfinden. Durch Auswahl eines Netzes verbindet sich das Anwendungsprogramm 18 automatisch mit dem Webdienst 7 und richtet bei erfolgreicher Authentifizierung am Webdienst 7 automatisch die WLAN-Verbindung ein. Optional sind ein Benutzername und ein Passwort in dem Anwendungsprogramm 18 bereits hinterlegt.

### Bezugszeichen:

1 Feldgerät
2 WLAN-Zugangspunkt
3 WLAN-Name
4 WLAN-Schlüssel
5 Server
6 Mobilgerät
7 Webdienst
8 Modul zur Erzeugung des WLAN-Schlüssels
9 erstes Modul
10 zweites Modul
11 Identifizierungsinformation
18 Anwendungsprogramm

## Patentansprüche

1. Verfahren zum Verbinden eines Mobilgerätes mit einem Feldgerät (1) über einen WLAN-Zugangspunkt (2),
wobei ein Server (5) mit einem Webdienst (7) vorgesehen ist,
wobei
das Feldgerät (1) ein erstes Modul (9) zur Erzeugung eines WLAN-Schlüssels (4) aufweist,
der Server (5) mit dem Webdienst (7) ein zweites Modul (10) zur Erzeugung eines WLAN-Schlüssels (4) aufweist,
wobei das erste Modul (9) und das zweite Modul (10) jeweils identische WLAN-Schlüssel (4) erzeugen,
wobei das Feldgerät (1) über mindestens eine Identifizierungsinformation (11) von dem Mobilgerät (6) identifiziert wird,
wobei das Mobilgerät (6) die Identifizierungsinformation (11) des Feldgeräts (1) an den Server (5) mit dem Webdienst (7) übermittelt,
wobei der Server (5) mit dem Webdienst (7) den zu der Identifizierungsinformation (11) zugehörigen WLAN-Schlüssel (4) an das Mobilgerät (6) übermittelt,
**dadurch gekennzeichnet, dass** das Mobilgerät (6) drahtlos mittels einem WLAN-Namen (3) und dem WLAN-Schlüssel (4) über den WLAN-Zugangspunkt (2) mit dem Feldgerät (1) verbunden wird, wobei der WLAN-Zugangspunkt (2) den WLAN-Namen (3) an das Mobilgerät (6) übermittelt, wobei der WLAN-Name (3) die Identifizierungsinformationen (11) des Feldgeräts (1) aufweist.

2. Verfahren nach Anspruch 1, **dadurch gekennzeichnet, dass** die Identifizierungsinformationen (11) an dem Feldgerät (1) angebracht sind und in das Mobilgerät (6) eingegeben werden.

3. Verfahren nach mindestens einem der vorhergehenden Ansprüche, **dadurch gekennzeichnet, dass** die Identifizierungsinformation (11) durch einen QR-Code an dem Feldgerät (1) dargestellt ist, wobei der QR-Code von dem Mobilgerät (6) gelesen wird.

4. Verfahren nach mindestens einem der vorhergehenden Ansprüche, **dadurch gekennzeichnet, dass** das Mobilgerät (6) die Identifizierungsinformation (11) des Feldgerätes (1) per Anruf, Textnachrichtendienst oder über das Internet an den Server (5) mit dem Webdienst (7) übermittelt.

5. Verfahren nach mindestens einem der vorhergehenden Ansprüche, **dadurch gekennzeichnet, dass** das Feldgerät (1) nur über den WLAN-Zugangspunkt (2) mit dem Mobilgerät (6) verbunden wird.

6. Verfahren nach mindestens einem der vorhergehenden Ansprüche, **dadurch gekennzeichnet, dass** der WLAN-Schlüssel (4) mindestens einmal pro Tag geändert wird.

7. Verfahren nach mindestens einem der vorhergehenden Ansprüche, **dadurch gekennzeichnet, dass** die Identifizierungsinformation (11) die Seriennummer und/oder die Bezeichnung des Feldgerätes (1) enthält.

8. Verfahren nach mindestens einem der vorhergehenden Ansprüche, **dadurch gekennzeichnet, dass** der WLAN-Name (3) einen Ressourcenanzeiger enthält, über welchen direkt auf den Webdienst (7) zugegriffen wird.

9. Verfahren nach mindestens einem der vorhergehenden Ansprüche, **dadurch gekennzeichnet, dass** das Mobilgerät (6) mittels Benutzername und Passwort an dem Server (5) mit dem Webdienst (7) angemeldet wird.

10. Verfahren nach mindestens einem der vorhergehenden Ansprüche, **dadurch gekennzeichnet, dass** das Mobilgerät (6) die Identifizierungsinformation (11) des Feldgeräts (1) an den Server (5) mit dem Webdienst (7) mittels mindestens einer Kurznachricht, insbesondere SMS übermittelt und/oder der Server (5) mit dem Webdienst (7) einen zu den Identifizierungsinformationen (11) zugehörigen WLAN-Schlüssel (4) mittels mindestens einer Kurznachricht, insbesondere SMS an das Mobilgerät (6) übermittelt.

11. Vorrichtung zum Verbinden eines Mobilgerätes (6) mit einem Feldgerät (1) über einen WLAN-Zugangspunkt, wobei ein Server (5) mit einem Webdienst (7) vorgesehen ist,
wobei
das Feldgerät (1) ein erstes Modul (9) zur Erzeugung eines WLAN-Schlüssels (4) aufweist,
der Server (5) mit dem Webdienst (7) ein zweites Modul (10) zur Erzeugung eines WLAN-Schlüssels (4) aufweist,
wobei das erste Modul (9) und das zweite Modul (10) ausgebildet sind, jeweils identische WLAN-Schlüssel (4) zu erzeugen,
wobei das Feldgerät (1) über eine Identifizierungsinformation (11) von dem Mobilgerät (6) identifizierbar ist,
wobei das Mobilgerät (6) ausgebildet ist, die Identifizierungsinformation (11) des Feldgeräts (1) an den Server (5) mit dem Webdienst (7) zu übermitteln,
wobei der Server (5) mit dem Webdienst (7) dazu ausgebildet ist, den zu der Identifizierungsinformation (11) zugehörigen WLAN-Schlüssel (4) an das Mobilgerät (6) zu übermitteln,
**dadurch gekennzeichnet, dass** das Mobilgerät (6) drahtlos mittels einem WLAN-Namen (3) und dem WLAN-Schlüssel (4) über den WLAN-Zugangspunkt (2) mit dem Feldgerät (1) verbunden ist, wobei der WLAN-Zugangspunkt (2) ausgebildet ist, den WLAN-Namen (3) an das Mobilgerät (6) zu übermitteln, wobei der WLAN-Name (3) Identifizierungsinformationen (11) des Feldgeräts (1) aufweist.

12. Vorrichtung nach Anspruch 11, **dadurch gekennzeichnet, dass** der WLAN-Name (3) einen Ressourcenanzeiger (15) enthält, über welchen direkt auf den Webdienst (7) zugegriffen werden kann.

13. Vorrichtung nach mindestens einem der vorhergehenden Ansprüche 11 bis 12, **dadurch gekennzeichnet, dass** das Mobilgerät (6) ausgebildet ist, die Identifizierungsinformationen (11) des Feldgeräts (1) an den Server (5) mit dem Webdienst (7) mittels mindestens einer Kurznachricht, insbesondere SMS zu übermitteln und/oder der Server (5) mit dem Webdienst (7) ausgebildet ist, einen zu den Identifizierungsinformationen (11) zugehörigen WLAN-Schlüssel (4) mittels mindestens einer Kurznachricht, insbesondere SMS an das Mobilgerät (6) zu übermitteln.

## Claims

1. A method of connecting a mobile device to a field device (1) via a wireless LAN access point (2),
wherein a server (5) having a web service (7) is provided;
wherein
the field device (1) has a first module (9) for generating a wireless LAN key (4);
the server (5) having the web service (7) has a second module (10) for generating a wireless LAN key (4);
wherein the first module (9) and the second module (10) respectively generate identical wireless LAN keys (4);
wherein the field device (1) is identified by the mobile device (6) via at least one piece of identification information (11);
wherein the mobile device (6) transmits the identification information (11) of the field device (1) to the server (5) having the web service (7);
wherein the server (5) having the web service (7) transmits the wireless LAN key (4) associated with the identification information (11) to the mobile device (6),
**characterized in that** the mobile device (6) is wirelessly connected to the field device (1) via the wireless LAN access point (2) by means of a wireless LAN name (3) and the wireless LAN key (4), with the wireless LAN access point (2) transmitting the wireless LAN name (3) to the mobile device (6), and with the wireless LAN name (3) having the identification information (11) of the field device (1).

2. A method in accordance with claim 1, **characterized in that** the identification information (11) is attached at the field device (1) and is input into the mobile device (6).

3. A method in accordance with at least one of the preceding claims,
**characterized in that** the identification information (11) is represented by a QR code at the field device (1), with the QR code being read by the mobile device (6).

4. A method in accordance with at least one of the preceding claims,
**characterized in that** the mobile device (6) transmits the identification information (11) of the field device (1) via a phone call, a text message service or via the internet to the server (5) having the web service (7).

5. A method in accordance with at least one of the preceding claims,
**characterized in that** the field device (1) is only connected to the mobile device (6) via the wireless LAN access point (2).

6. A method in accordance with at least one of the preceding claims,
**characterized in that** the wireless LAN key (4) is changed at least once a day.

7. A method in accordance with at least one of the preceding claims,
**characterized in that** the identification information (11) includes the serial number and/or the designation of the field device (1).

8. A method in accordance with at least one of the preceding claims,
**characterized in that** the wireless LAN name (3) includes a resource identifier via which access to the web service (7) can directly be made.

9. A method in accordance with at least one of the preceding claims,
**characterized in that** the mobile device (6) is logged in at the server (5) having the web service (7) by means of a user name and a password.

10. A method in accordance with at least one of the preceding claims,
**characterized in that** the mobile device (6) transmits the identification information (11) of the field device (1) by means of at least one short message, in particular a text message, to the server (5) having the web service (7); and/or **in that** the server (5) having the web service (7) transmits a wireless LAN key (4) associated with the identification information (11) by means of at least one short message, in particular a text message, to the mobile device (6).

11. An apparatus for connecting a mobile device (6) to a field device (1) via a wireless LAN access point, wherein a server (5) having a web service (7) is provided;
wherein
the field device (1) has a first module (9) for generating a wireless LAN key (4);
the server (5) having the web service (7) has a second module (10) for generating a wireless LAN key (4);
wherein the first module (9) and the second module (10) are configured to respectively generate identical wireless LAN keys (4);
wherein the field device (1) can be identified via a piece of identification information (11) by the mobile device (6);
wherein the mobile device (6) is configured to transmit the identification information (11) of the field device (1) to the server (5) having the web service (7);
wherein the server (5) having the web service (7) is configured to transmit the wireless LAN key (4) associated with the identification information (11) to the mobile device (6),
**characterized in that** the mobile device (6) is wirelessly connected to the field device (1) via the wireless LAN accessor point (2) by means of a wireless LAN name (3) and the wireless LAN key (4), with the wireless LAN access point (2) being configured to transmit the wireless LAN name (3) to the mobile device (6), and with the wireless LAN name (3) having identification information (11) of the field device (1).

12. An apparatus in accordance with claim 11, **characterized in that** the wireless LAN name (3) includes a resource identifier (15) via which access to the web service (7) can directly be made.

13. An apparatus in accordance with at least one of the preceding claims 11 to 12, **characterized in that** the mobile device (6) is configured to transmit the identification information (11) of the field device (1) by means of at least one short message, in particular a text message, to the server (5) having the web service (7); and/or **in that** the server (5) having the web service (7) is configured to transmit a wireless LAN key (4) associated with the identification information (11) by means of at least one short message, in particular a text message, to the mobile device (6).

## Revendications

1. Procédé de connexion d'un appareil mobile avec un appareil de terrain (1) via un point d'accès WLAN (2), dans lequel il est prévu un serveur (5) pourvu d'un service Web (7),
l'appareil de terrain (1) présente un premier module (9) pour générer une clé WLAN (4),
le serveur (5) pourvu du service Web (7) présente un second module (10) pour générer une clé WLAN (4),
le premier module (9) et le second module (10) génèrent chacun des clés WLAN (4) identiques,
l'appareil de terrain (1) est identifié par l'appareil mobile (6) via au moins une information d'identification (11),
l'appareil mobile (6) transmet l'information d'identification (11) de l'appareil de terrain (1) au serveur (5) pourvu du service Web (7),
le serveur (5) pourvu du service Web (7) transmet à l'appareil mobile (6) la clé WLAN (4) appartenant à l'information d'identification (11),
**caractérisé en ce que** l'appareil mobile (6) est connecté sans fil à l'appareil de terrain (1) au moyen d'un nom WLAN (3) et de la clé WLAN (4) via le point d'accès WLAN (2), le point d'accès WLAN (2) transmettant le nom WLAN (3) à l'appareil mobile (6), le nom WLAN (3) présentant les informations d'identification (11) de l'appareil de terrain (1).

2. Procédé selon la revendication 1,
**caractérisé en ce que** les informations d'identification (11) sont déposées sur l'appareil de terrain (1) et sont entrées dans l'appareil mobile (6).

3. Procédé selon l'une au moins des revendications précédentes,
**caractérisé en ce que** l'information d'identification (11) est représentée par un code QR sur l'appareil de terrain (1), le code QR étant lu par l'appareil mobile (6).

4. Procédé selon l'une au moins des revendications précédentes,
**caractérisé en ce que** l'appareil mobile (6) transmet au serveur (5) pourvu du service Web (7) l'information d'identification (11) de l'appareil de terrain (1) par appel, par service de message texte ou par Internet.

5. Procédé selon l'une au moins des revendications précédentes,
**caractérisé en ce que** l'appareil de terrain (1) n'est connecté à l'appareil mobile (6) que via le point d'accès WLAN (2).

6. Procédé selon l'une au moins des revendications précédentes,
**caractérisé en ce que** la clé WLAN (4) est modifiée au moins une fois par jour.

7. Procédé selon l'une au moins des revendications précédentes,
**caractérisé en ce que** l'information d'identification (11) contient le numéro de série et/ou la désignation de l'appareil de terrain (1).

8. Procédé selon l'une au moins des revendications précédentes,
**caractérisé en ce que** le nom WLAN (3) contient un indicateur de ressource via lequel on accède directement au service Web (7).

9. Procédé selon l'une au moins des revendications précédentes,
**caractérisé en ce que** l'appareil mobile (6) est enregistré auprès du serveur (5) pourvu du service Web (7) au moyen du nom de l'utilisateur et d'un mot de code.

10. Procédé selon l'une au moins des revendications précédentes,
**caractérisé en ce que** l'appareil mobile (6) transmet au serveur (5) pourvu du service Web (7) l'information d'identification (11) de l'appareil de terrain (1) au moyen d'au moins un message court, en particulier d'un SMS, et/ou le serveur (5) pourvu du service Web (7) transmet à l'appareil mobile (6) une clé WLAN (4), appartenant aux informations d'identification (11), au moyen d'un message court, en particulier d'un SMS.

11. Dispositif de connexion d'un appareil mobile (6) avec un appareil de terrain (1) via point d'accès WLAN (2), dans lequel il est prévu un serveur (5) pourvu d'un service Web (7),
l'appareil de terrain (1) présente un premier module (9) pour générer une clé WLAN (4),
le serveur (5) pourvu du service Web (7) présente un second module (10) pour générer une clé WLAN (4),
le premier module (9) et le second module (10) sont réalisés pour générer chacun des clés WLAN (4) identiques,
l'appareil de terrain (1) peut être identifié par l'appareil mobile (6) via une information d'identification (11),
l'appareil mobile (6) est réalisé pour transmettre l'information d'identification (11) de l'appareil de terrain (1) au serveur (5) pourvu du service Web (7), le serveur (5) pourvu du service Web (7) est réalisé pour transmettre à l'appareil mobile (6) la clé WLAN (4) appartenant à l'information d'identification (11),
**caractérisé en ce que** l'appareil mobile (6) est connecté sans fil à l'appareil de terrain (1) au moyen d'un nom WLAN (3) et de la clé WLAN (4) via le point d'accès WLAN (2), le point d'accès WLAN (2) étant réalisé pour transmettre le nom WLAN (3) à l'appareil mobile (6), le nom WLAN (3) présentant des informations d'identification (11) de l'appareil de terrain (1).

12. Dispositif selon la revendication 11,
**caractérisé en ce que** le nom WLAN (3) contient un indicateur de ressource (15) via lequel on peut accéder directement au service Web (7).

13. Dispositif selon l'une au moins des revendications précédentes 11 à 12,
**caractérisé en ce que** l'appareil mobile (6) est réalisé pour transmettre au serveur (5) pourvu du service Web (7) les informations d'identification (11) de l'appareil de terrain (1) au moyen d'au moins un message court, en particulier d'un SMS, et/ou le serveur (5) pourvu du service Web (7) est réalisé pour transmettre à l'appareil mobile (6) une clé WLAN (4), appartenant aux informations d'identification (11), au moyen d'au moins un message court, en particulier d'un SMS.
